Europäisches Patentamt

European Patent Office

Office européen des brevets

(19)

(11) Veröffentlichungsnummer: **0 032 762**
**B1**

(12) **EUROPÄISCHE PATENTSCHRIFT**

(45) Veröffentlichungstag der Patentschrift:
07.09.83

(51) Int. Cl.³: **G 01 P 3/48**

(21) Anmeldenummer: **81200020.6**

(22) Anmeldetag: **12.01.81**

(54) **Zylindrischer kapazitiver Tachogenerator.**

(30) Priorität: **22.01.80 AT 331/80**

(43) Veröffentlichungstag der Anmeldung:
**29.07.81 Patentblatt 81/30**

(45) Bekanntmachung des Hinweises auf die Patenterteilung:
**07.09.83 Patentblatt 83/36**

(84) Benannte Vertragsstaaten:
**CH DE FR GB IT LI**

(56) Entgegenhaltungen:
**CH-A-471 387**
**DE-A-2 148 703**
**DE-B-1 210 217**
**NL-C-96 275**
**US-A-3 172 023**

(73) Patentinhaber: **N.V. Philips' Gloeilampenfabrieken,
Groenewoudseweg 1, NL-5621 BA Eindhoven (NL)**

(72) Erfinder: **Marsoner, Günter, p/A INTERN.
OCTROOIBUREAU B.V. Prof. Holstlaan 6, NL-5656 AA
Eindhoven (NL)**

(74) Vertreter: **Grotepas, Frans et al, INTERNATIONAAL
OCTROOIBUREAU B.V. Prof. Holstlaan 6, NL-5656 AA
Eindhoven (NL)**

## Zylindrischer kapazitiver Tachogenerator

Die Erfindung betrifft einen zylindrischen kapazitiven Tachogenerator mit einem Rotor und einem Stator, von denen einer als Innenzylinder und der andere als koaxialer äußerer Hohlzylinder ausgebildet ist, wobei die beiden Zylinder an den einander zugewandten Zylinderflächen, unter Bildung eines gegenseitigen Luftspaltes, je mit einer gleichen Anzahl von gleichmäßig über den Umfang verteilten, durch Zahnlücken voneinander getrennten Zähnen versehen sind, und wobei das Verhältnis der kapazitiv wirksamen Breite eines Zahnes an seinem freien Ende zur kapazitiv wirksamen Breite einer auf gleichem Umfangsniveau benachbarten Zahnlücke einen vorgegebenen Wert aufweist. Ein derartiger Tachogenerator ist beispielsweise in der DE-AS 1 210 217 beschrieben. Bei diesem bekannten Tachogenerator sind die Zähne relativ breit und die Zahnlücken relativ schmal ausgeführt, so daß hier ein Verhältnis der kapazitiv wirksamen Breite eines Zahnes zur kapazitiv wirksamen Breite einer benachbarten Zahnlücke von etwa 1 : 0,12 vorliegt. Ein derartiger Tachogenerator liefert ein impulsförmiges Ausgangssignal. Unter kapazitiv wirksamer Breite eines Zahnes bzw. einer Zahnlücke wird hierbei ein solcher Wert verstanden, der sich bei einer Abrundung oder Abschrägung der quer zur Bewegungsrichtung des Rotors verlaufenden Zahnkanten an den freien Enden der Zähne als Mittelwert hinsichtlich des wirksamen Luftspaltes zwischen Stator und Rotor ergibt, worauf im folgenden noch eingegangen werden wird.

Die Erfindung hat sich zum Ziel gesetzt, einen Tachogenerator der eingangs angeführten Art so auszubilden, daß er ein möglichst sinusförmiges Ausgangssignal mit möglichst großer Amplitude liefert, da es für die Auswertung des Ausgangssignals eines solchen Tachogenerators vielfach erwünscht ist, daß ein sinusförmiges Signal vorliegt. Die Erfindung weist hierzu das Kennzeichen auf, daß die jeweilige kapazitiv wirksame Breite der Zähne der einen Zylinderfläche kleiner ist als die jeweilige kapazitiv wirksame Breite der Zahnlücken der anderen Zylinderfläche. Auf diese Weise ist erreicht, daß, wenn sich die Zähne des Rotors an den Zähnen bzw. Zahnlücken des Stators vorbeibewegen sich jeweils zwei Lagen ergeben, in welchen einerseits einander nur zwei Zähne vollständig gegenüberstehen und andererseits nur ein Zahn vollständig einer Zahnlücke gegenüber steht, ohne daß hierbei ein Zahn eine Zahnlücke überbrücken könnte. Damit ergeben sich aber in diesen beiden Extremlagen zwei sehr unterschiedliche kapazitive Werte, je nachdem ob sich zwei Zähne gegenüberstehen oder ob ein Zahn einer Zahnlücke gegenübersteht, was mit den entsprechenden kapazitiven Zwischenwerten in den anderen Lagen des Rotors gegenüber dem Stator zur Folge hat, daß der Tachogenerator ein weitgehend sinusförmiges Signal mit relativ großer Amplitude liefert.

Versuche haben ergeben, daß das Ausgangssignal des Tachogenerators dann möglichst sinusförmig ist, wenn das Verhältnis der kapazitiv wirksamen Breite eines Zahnes zur kapazitiv wirksamen Breite einer benachbarten Zahnlücke an einer Zylinderfläche in der Größenordnung von 1 : 1 und an der anderen Zylinderfläche zwischen 1 : 2 bis 1 : 4 gewählt ist. Unter der Bezeichnung Größenordnung sollen hierbei Abweichungen vom Verhältnis 1 : 1 verstanden werden, die etwa ±40% betragen können. In diesem Zusammenhang hat es sich als besonders vorteilhaft erwiesen, wenn das Verhältnis an der einen Zylinderfläche mit 1 : 1 ±10% und an der anderen Zylinderfläche 1 : 3 ±10% gewählt ist. Bei einer derartigen Wahl der beiden Verhältnisse hat sich ein besonders optimales Ausgangssignal des Tachogenerators ergeben.

Üblicherweise werden die beiden Zylinder eines solchen Tachogenerators aus einem elektrisch leitfähigen Material, beispielsweise aus Stahl, hergestellt, um die entsprechende kapazitive Wirkung zu erzielen. Da die Zähne bzw. Zahnlücken hinsichtlich ihrer Form und Abmessungen sehr genau hergestellt werden müssen, sind hierzu Schleifverfahren erforderlich, die relativ aufwendig und kostspielig sind. Hinsichtlich einer besonders einfachen Herstellung eines solchen Tachogenerators hat sich demgemäß als besonders vorteilhaft erwiesen, wenn die beiden Zylinder mit den an ihnen vorgesehenen Zähnen als Kunststoffteile ausgebildet sind, die an ihrer Oberfläche zumindest teilweise mit einer elektrisch leitenden Schicht versehen sind. Auf diese Weise sind die beiden Zylinder relativ einfach und genau in Spritzgußtechnik herstellbar, wobei dann die erforderlichen kapazitiven Eigenschaften durch die elektrisch leitenden Schichten bewirkt werden. Solche leitende Schichten können beispielsweise einfach auf galvanischem Weh hergestellt werden, wobei dann die Zähne und Zahnlücken genau im gewünschten Verhältnis zueinander stehen.

Die Erfindung wird im folgenden anhand der Zeichnung, in der ein Ausführungsbeispiel der Erfindung dargestellt ist, auf welches sie jedoch nicht beschränkt sein soll, näher erläutert. Fig. 1 zeigt im Schnitt einen zylindrischen kapazitiven Tachogenerator, der mit der Antriebswelle eines Aufzeichnungs- und/oder Widergabegerätes für einen bandförmigen Aufzeichnungsträger verbunden ist. In Fig. 2 sind im vergrößerten Maßstab die einander gegenüberstehenden Zähne bzw. Zahnlücken des Stators und Rotors dargestellt. Fig. 3 zeigt in nochmals vergrößertem Maßstab Zähne, deren Zahnkanten abgerundet sind.

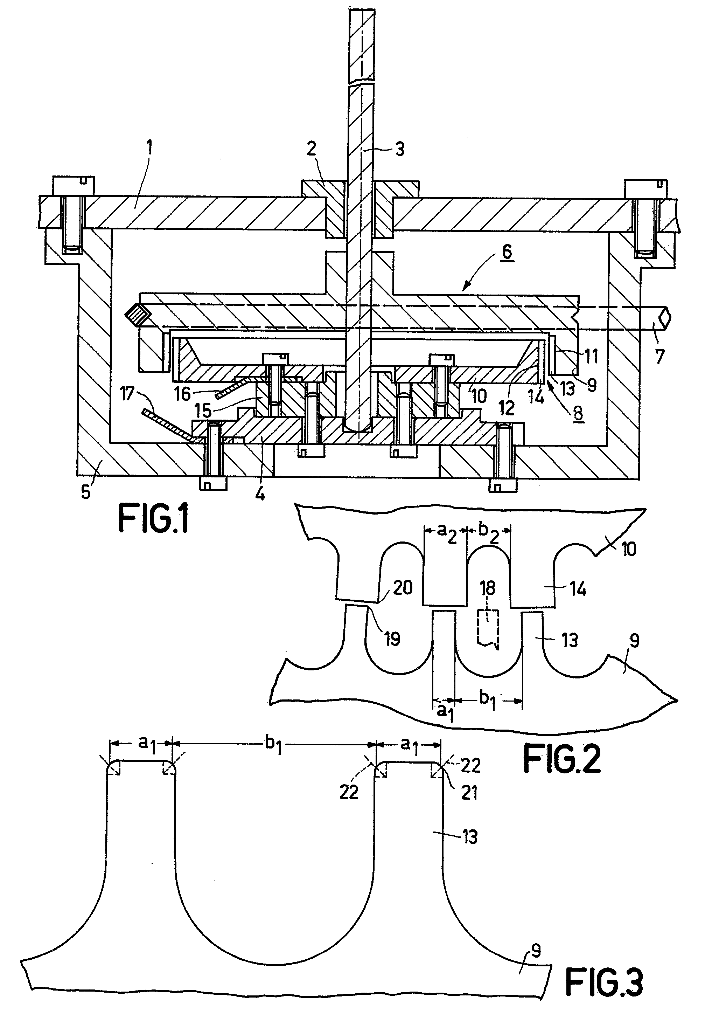

In Fig. 1 ist mit 1 das Chassis eines Aufzeichnungs- und/oder Wiedergabegerätes bezeichnet, welches eine Lagerbuchse 2 trägt, in der eine Antriebswelle 3 für die Fortbewegung eines hier nicht näher dargestellten bandförmigen Aufzeichnungsträgers drehbar gelagert ist. Zur Abstützung der Antriebswelle 3 in axialer Richtung ist in üblicher Weise ein Spurlager 4 vorgesehen, welches von einem U-förmigen Bügel 5 getragen wird, der am Chassis 1 befestigt ist. Mit der Antriebswelle 3 ist, wie bei derartigen Geräten üblich, eine Schwungscheibe 6 verbunden, die über einen Riemen 7 von einem Motor her antreibbar ist.

Da an einen Antrieb für eine solche Antriebswelle vielfache hohe Genauigkeitsanforderungen gestellt werden, wird hierzu vielfach eine Servoregelung herangezogen. Eine solche Servoregelung bildet aus dem Vergleich eines Sollsignales und eines Istsignales ein Regelsignal, welches beispielsweise dem Antriebsmotor zugeführt wird. Um nun ein solches Istsignal zu gewinnen, werden üblicherweise Tachogeneratoren vorgesehen, die mit dem anzutreibenden Teil in Wirkverbindung stehen. Im vorliegenden Fall steht ein zylindrischer kapazitiver Tachogenerator 8 mit der Antriebswelle 3 in Verbindung. Selbstverständlich kann ein solcher Tachogenerator aber auch im Zusammenhang mit anderen Antrieben verwendet werden, wie beispielsweise für den Antrieb eines Wickeltellers eines Aufzeichnungs- und/oder Wiedergabegerätes oder überhaupt allgemein für irgendeinen rotierend angetriebenen Teil. Solche Tachogeneratoren können aber beispielsweise auch nur zur Gewinnung eines Signals, welches die Drehung eines Teiles kennzeichnet, herangezogen werden. Zylindrische kapazitive Tachogeneratoren werden hierbei vielfach wegen ihres relativ einfachen Aufbaues verwendet. Auf die Ausführungsform eines solchen zylindrischen kapazitiven Tachogenerators bezieht sich die vorliegende Erfindung.

Ein derartiger zylindrischer kapazitiver Tachogenerator besteht aus einem Rotor 9 und einem Stator 10, wobei der Rotor mit dem sich drehenden Teil in Verbindung steht. Der Rotor und der Stator sind dabei entweder als Innenzylinder oder als koaxialer äußerer Hohlzylinder ausgebildet, wobei es egal ist, welcher der beiden Zylinder als Rotor bzw. als Stator wirksam ist. Beim vorliegenden Ausführungsbeispiel ist der Stator 10 als Innenzylinder und der Rotor 9 als koaxialer äußerer Hohlzylinder ausgebildet, wobei letzterer unmittelbar an der Schwungscheibe 6 angeordnet und mit dieser als einstückiger Teil ausgebildet ist. Die beiden, aus einem elektrisch leitfähigen Material, wie beispielsweise Stahl, hergestellten Zylinder 9 bzw. 10 weisen an den einander zugewandten Zylinderflächen 11 bzw. 12 unter Bildung eines gegenseitigen Luftspaltes, je eine gleiche Anzahl von gleichmäßig über den Umfang verteilten, durch Zahnlücken voneinander getrennten Zähnen 13 bzw. 14 auf. Auf diese Weise bilden der Rotor 9 und der Stator 10 miteinander einen Kondensator, dessen Kapazitätswert sich je nach der gegenseitigen Lage der Zähne des Rotors gegenüber den Zähnen des Stators ändert, und zwar ob sich zwei Zähne gegenüberstehen oder ob ein Zahn einer Zahnlücke gegenübersteht bzw. entsprechend den dazwischen liegenden Lagen. Wird an einen solchen Kondensator mit periodisch variabler Kapazität ein Signal, entweder eine Gleichspannung oder eine Wechselspannung, angelegt, so ändert sich die Amplitude dieses Signals je nachdem, welcher Kapazitätswert gerade vorliegt. Auf diese Weise wird eine Wechselspannung erhalten, welche das Ausgangssignal des Tachogenerators bildet. Bei einem solchen Kondensator ist es dabei erforderlich, daß einer der beiden Zylinder isoliert angeordnet ist, was meist einfacher beim Stator realisierbar ist. Demgemäß ist beim vorliegenden Ausführungsbeispiel der Stator 10 über einen Isolierring 15 mit dem Spurlager 4 verbunden, wobei zwischen dem Stator und dem Isolierring noch eine Anschlußelektrode 16 vorgesehen ist, um eine elektrisch leitende Verbindung zum Stator 10 herstellen zu können. Eine zweite Anschlußelektrode 17 ist zwischen dem Spurlager 4 und dem Bügel 5 vorgesehen, welche als Masseanschluß dient. Über diese Elektrode 17, das Spurlager 4, die Antriebswelle 3 und die Schwungscheibe 6 ist damit eine elektrisch leitende Verbindung zum Rotor 9 hergestellt. Selbstverständlich könnte eine solche leitende Verbindung zum Rotor 9 auch unmittelbar durch einen mit dem Rotor 9 zusammenwirkenden Schleifkontakt hergestellt werden.

Die Variation des Kapazitätswerte in Abhängigkeit der jeweiligen Lage der Zähne des Rotors gegenüber den Zähnen des Stators eines solchen zylindrischen kapaziven Tachogenerators und damit auch die Amplitude und Kurvenform des Ausgangssignals, hängt nun davon ab, wie die Zähne 13 bzw. 14 an der Zylinderfläche 11 bzw. an der Zylinderfläche 12 gegenüber den Zahnlücken zwischen den Zähnen ausgebildet sind. Im Hinblick darauf, daß das Ausgangssignal eines solchen Tachogenerators möglichst eine große Amplitude und einen sinusförmigen Kurvenverlauf haben soll, ist bei einem erfindungsgemäßen Tachogenerator die kapazitiv wirksame Breite eines Zahnes an einer Zylinderfläche kleiner als die kapazitiv wirksame Breite einer Zahnlücke an der anderen Zylinderfläche ausgeführt, wie dies Fig. 2 zeigt.

Bei dem in Fig. 2 dargestellten Ausführungsbeispiel sind die Zähne 13 am Rotor 9 und die Zähne 14 am Stator 10 an ihren freien Ende scharfkantig ausgeführt, so daß hier die kapazitiv wirksame Breite der Zähne bzw. Zahnlücken der totalen tatsächlichen Breite der Zähne bzw. Zahnlücken entspricht. Die Breite der Zähne 13 am Rotor 9 ist mit $a_1$ und die Breite einer benachbarten Zahnlücke mit $b_1$ bezeichnet. Die Breite der Zähne 14 am Stator 10 ist mit $a_2$ und die Breite einer benachbarten Zahnlücke mit $b_2$ angegeben. Wie ersichtlich, ist die Breite $a_1$ der Zähne 13 am Rotor 9 kleiner als die Breite $b_2$ der Zahnlücken zwischen den Zähnen 14 am Stator 10. Der Grund der Zahnlücken ist beim vorliegenden Ausführungsbeispiel zur einfacheren Herstellung abgerundet ausgeführt, so daß die Zylinderflächen des Rotors bzw. Stators, von welchen die Zähne 13 bzw. 14 auskragen, hier aus halbkreisförmigen Abschnitten bestehen, was im vorliegenden Zusammenhang aber ohne Bedeutung ist, da diese Bereiche der Zahnlücken nicht mehr kapazitiv wirksam sind. Sowohl der Stator 10 als auch der Rotor 9 tragen die gleiche Anzahl von Zähnen, die gleichmäßig über den Umfang verteilt angeordnet sind, so daß sie in gleichen Winkelabständen zueinander liegen. Das Verhältnis der Breite $a_1$ der Zähne 14 am Stator 10 zur Breite $b_1$ der benachbarten Zahnlücken ist dabei mit etwa 1 : 1 gewählt. Da, wie bereits erwähnt, die Breite $a_2$ der Zähne 13 am Rotor 9 kleiner gewählt ist als die Breite $b_2$ der Zahnlücken zwischen den Zähnen 14 am Stator 10, sind hiermit die Zähne 13 am Rotor 9 schmäler als die Zähne 14 am Stator 10, womit $a_1$ kleiner als $a_2$ ist. Es wäre ohne weiteres möglich, diese Ausführungsform der Zähne bzw. Zahnlücken auch hinsichtlich des Stators bzw. Rotors umzukehren und die Zähne 13 am Rotor 9 breiter als die Zähne 14 am Stator 10 auszubilden, da sich zufolge der gleichmäßigen Verteilung der Zähne über den Umfang hierbei die Eigenschaften des Tachogenerators nicht ändern. Es kommt nämlich nur darauf an, wie die Zähne bzw. Zahnlücken einerseits am Stator und andererseits am Rotor ausgebildet sind.

In Fig. 2 ist eine Lage des Rotors 9 gegenüber dem Stator 10 dargestellt, in der sich die Zähne am Rotor bzw. Stator genau gegenüberstehen, womit der Luftspalt zwischen ihnen am kleinsten und damit der Kapazitätswert am größten ist. Die Lage, in welcher der Kapazitätswert am kleinsten ist, wird dann erreicht, wenn die Zähne 13 des Rotors 9 genau den Zahnlücken zwischen den Zähnen 14 am Stator 10 gegenüberstehen, wie dies in Fig. 2 für einen Zahn mit strichlierten Linien 18 angedeutet ist. In den Zwischenlagen zwischen den beiden vorgenannten Lagen des Rotors gegenüber dem Stator ergeben sich Kapazitätswerte, die zwischen den beiden vorgenannten Extremwerten liegen. Durch die Maßnahme, daß die Breite $a_1$ der Zähne 13 kleiner gewählt ist als die Breite $b_2$ der Zahnlücken zwischen den Zähnen 14 ist nun erreicht, daß die maximalen und minimalen Kapazitätswerte des Tachogenerators dem Betrag nach sehr unterschiedlich sind, da nicht der Fall eintreten kann, daß ein Zahn die gegenüberliegende Zahnlücke überbrückt. Demgemäß ist das Ausgangssignal des Tachogenerators dem Betrag nach groß und weist auch einen weitgehend sinusförmigen Kurvenverlauf auf.

Als sehr günstig hat sich in diesem Zusammenhang erwiesen, wenn das Verhältnis der kapazitiv wirksamen Breite eines Zahnes zur kapazitiv wirksamen Breite einer benachbarten Zahnlücke an einer Zylinderfläche in der Größenordnung 1 : 1 und an der anderen Zylinderfläche zwischen 1 : 2 bis 1 : 4 gewählt ist. Unter der Bezeichnung Größenordnung sollen hierbei Abweichungen vom Verhältnis 1 : 1 verstanden werden, die etwa ±40% betragen können, also daß dieses Verhältnis etwa zwischen 1 : 1,4 und 1 : 0,6 liegen kann. Je nachdem wird dann das Verhältnis der kapazitiv wirksamen Breite eines Zahnes zur kapazitiv wirksamen Breite einer benachbarten Zahnlücke an der anderen Zylinderfläche zwischen 1 : 2 und 1 : 4 gewählt, um wieder ein optimales Ausgangssignal des Tachogenerators zu erhalten. Am zweckmäßigsten werden die jeweils günstigsten Verhältnisse durch Versuche ermittelt. Als besonders vorteilhaft hat sich dabei erwiesen, wenn das Verhältnis an der einen Zylinderfläche mit 1 : 1 ±10% und an der anderen Zylinderfläche mit 1 : 3 ±10% gewählt ist.

Hinsichtlich der Herstellung des Rotors und Stators ist es meist schwierig, die quer zur Bewegungsrichtung des Rotors verlaufenden, an den freien Enden der Zähne 13 bzw. 14 liegenden, die Änderungen des Kapazitätswertes mitbestimmenden, Zahnkanten 19 bzw. 20 scharfkantig auszuführen. Es empfiehlt sich daher, diese Zahnkanten 19 bzw. 20 entweder abzuschrägen oder abzurunden, wie dies in Fig. 3 für die Zähne 13 am Rotor 9 in Form von Abrunden dargestellt ist. Diese Abrundungen sind mit 21 bezeichnet und bestehen hier je aus einem Viertelkreis. Da die freien Enden der Zähne das kapazitive Verhalten des Tachogenerators hinsichtlich des jeweils wirksamen Luftspaltes bestimmen, haben derartige Abrundungen oder Abschrägungen einen entsprechenden Einfluß auf die Änderungen des Kapazitätswertes in Abhängigkeit der jeweiligen Lage der Zähne des Rotors gegenüber den Zähnen des Stators. Demgemäß sind solche Abrundungen oder Abschrägungen hinsichtlich des zu wählenden Verhältnisses der Breite eines Zahnes zur benachbarten Zahnlücke mit zu berücksichtigen. Dies erfolgt dadurch, daß ein entsprechender Mittelwert für die Breite eines Zahnes und dementsprechend auch für die Breite der benachbarten Zahnlücke im gleichen Umfangsniveau festgelegt wird, der als kapazitiv wirksame Breite anzusehen ist und einen entsprechenden Mittelwert für den wirksamen Luftspalt zwischen dem Stator und Rotor ergibt. Da der Luftspalt zwischen den freien Enden der Zähne einerseits des Rotors und andererseits des Stators üblicherweise sehr klein gewählt wird, um große Kapazitätswerte zu erhalten, sind die hinsichtlich der Abrundungen bzw. Abschrägungen zu berücksichtigenden Änderungen in der kapazitiv wirksamen Breite auch nur sehr klein, da bereits Teile der Zähne, die nur etwas weg vom eigentlichen Luftspalt liegen, keinen Einfluß mehr auf das kapazitive Verhalten haben. Beim vorliegenden Ausführungsbeispiel mit einer Abrundung der Zahnkanten durch einen Viertelkreis kann angenommen werden, daß die unter 45° verlaufende Winkelsymmetrale 22 in ihrem Schnittpunkt mit der Abrundung 21 jeweils die kapazitiv wirksame Breite festlegt. Gleiches würde gelten für eine Abschrägung unter 45°.

Im folgenden werden quantitative Angaben für die Ausbildung eines derartigen zylindrischen kapazitiven Tachogenerators gemacht, mit dem besonders günstige Ergebnisse erreicht wurden. Der Stator und der Rotor sind mit je 132 gleichmäßig über den Umfang verteilten Zähnen versehen. Der Durchmesser des Stators im Umfangsniveau der freien Enden der Zähne ist 89,9 mm und der des Rotors 90,5 mm, womit sich ein Luftspalt von 0,3 mm zwischen den freien Enden der Zähne ergibt. Der Stator ist dabei mit Zähnen versehen, die eine totale Breite von 1,1 mm haben, wobei die totale Breite der Zahnlücken mit 1 mm gewählt ist. Die Zahnkanten sind mit einem Viertelkreis abgerundet, dessen Radius 0,12 mm beträgt. Damit ergibt sich für die Zähne des Stators eine kapazitiv wirksame Breite von 1,028 mm, woraus eine kapazitiv wirksame Breite für die benachbarten Zahnlücken von 1,072 mm folgt. Daraus ergibt sich für den Stator ein Verhältnis der kapazitiv wirksamen Breite eines Zahnes zur kapazitiv wirksamen Breite einer benachbarten Lücken von 1 : 1,04. Die Zähne des Rotors sind mit einer totalen Breite von 0,6 mm und die benachbarten Zahnlücken mit einer totalen Breite von 1,55 mm ausgeführt. Die Zahnkanten sind wieder mit einem Viertelkreis abgerundet, dessen Radius 0,12 mm beträgt. Damit ergibt sich für die Zähne des Rotors eine kapazitiv wirksame Breite von 0,53 mm, woraus die kapazitiv wirksame Breite einer benachbarten Zahnlücke mit 1,62 mm folgt. Demgemäß ist das Verhältnis der kapazitiv wirksamen Breite eines Zahnes zur kapazitiv wirksamen Breite einer benachbarten Zahnlücke für den Rotor 1 : 3,06. Wie ersichtlich, ist damit die kapazitiv wirksame Breite der Zähne des Rotors etwa um die Hälfte kleiner als die kapazitiv wirksame Breite der Zahnlücken zwischen den Zähnen am Stator. Die Höhe der Zähne vom Grund der benachbarten Zahnlücke aus gesehen beträgt dabei 1,5 mm, was aber im vorliegenden Zusammenhang nicht wichtig ist.

Wie aus den vorstehend angeführten Zahlenangaben ersichtlich, sind die Zähne eines derartigen Tachogenerators relativ klein ausgeführt. Trotzdem müssen sie aber hinsichtlich ihrer Abmessungen bzw. Form sehr genau ausgeführt sein, damit das Ausgangssignal des Tachogenerators keine unerwünschten Schwankungen aufweist, weil sich Ungleichmäßigkeiten in der Ausbildung der Zähne unmittelbar auf das kapazitive Verhalten auswirken und letzteres wieder das Ausgangssignal bestimmt. Für einen derartigen Tachogenerator hat sich daher als besonders vorteilhaft erwiesen, wenn die beiden Zylinder des Stators und des Rotors mit den an ihnen vorgesehenen Zähnen als Kunststoffteile ausgebildet sind, da in der Kunststofftechnik durch Spritzgußverfahren solche Teile einfach und genau hergestellt werden können. Um diese Kunststoffteile als Kondensator wirksam zu machen, werden sie an ihrer Oberfläche, zumindest in den hierfür erforderlichen Bereichen, mit einer elektrisch leitenden Schicht versehen, beispielsweise dadurch, daß eine Metallschicht galvanisch aufgebracht wird. Eine solche Schicht muß mindestens die Zähne und Zahnlücken abdecken und bis zur entsprechenden Anschlußelektrode reichen. Auf diese Weise sind die Zähne und Zahnlücken im gewünschten Verhältnis ihrer kapazitiv wirksamen Breite sehr genau und einfach herstellbar. Da gemäß dem Ausführungsbeispiel nach Fig. 1 der Rotor 9 des Tachogenerators und die Schwungscheibe 6 einstückig ausgebildet sind, kann als Material für diesen Teil ein mit Bleioxyd gefüllter Kunststoff verwendet werden, damit die Schwungscheibe die erforderliche Masse zur Stabilisierung der Drehzahl der Antriebswelle 3 hat.

## Patentansprüche

1. Zylindrischer kapazitiver Tachogenerator mit einem Rotor (9) und einem Stator (10), von denen einer als Innenzylinder und der andere als koaxialer äußerer Hohlzylinder ausgebildet ist, wobei die beiden Zylinder an den einander zugewandten Zylinderflächen (11, 12), unter Bildung eines gegenseitigen Luftspaltes, je mit einer gleichen Anzahl von gleichmäßig über den Umfang verteilten, durch Zahnlücken voneinander getrennten Zähnen (13, 14) versehen sind und wobei das Verhältnis der kapazitiv wirksamen Breite eines Zahnes an seinem freien Ende zur kapazitiv wirksamen Breite einer auf gleichem Umfangsniveau benachbarten Zahnlücke einen vorgegebenen Wert aufweist, dadurch gekennzeichnet, daß die jeweils kapazitiv wirksame Breite ($a_1$, $a_2$) der Zähne der einen Zylinderfläche kleiner ist als die jeweilige kapazitiv wirksame Breite ($b_2$, $b_1$) der Zahnlücken der anderen Zylinderfläche.

2. Tachogenerator nach Anspruch 1, dadurch gekennzeichnet, daß das Verhältnis der kapazitiv wirksamen Breite eines Zahnes zur kapazitiv wirksamen Breite einer benachbarten Zahnlücke an einer Zylinderfläche in der Größenordnung von 1 : 1 und an der anderen Zylinderfläche zwischen 1 : 2 bis 1 : 4 gewählt ist.

3. Tachogenerator nach Anspruch 1, dadurch gekennzeichnet, daß das Verhältnis an der einen Zylinderfläche mit 1 : 1 ±10% und an der anderen Zylinderfläche mit 1 : 3 ±10% gewählt ist.

4. Tachogenerator nach einem der vorhergehenden Ansprüche, dadurch gekennzeichnet, daß die beiden Zylinder mit den an ihnen vorgesehenen Zähnen als Kunststoffteile ausgebildet sind, die an ihrer Oberfläche zumindest teilweise mit einer elektrisch leitenden Schicht versehen sind.

## Claims

1. A cylindrical capacitive tachogenerator comprising a rotor (9) and a stator (10), one of which takes the form of an inner cylinder and the other of a coaxial hollow outer cylinder, which two cylinders, between whose facing cylinder surfaces (11, 12) an air gap is formed, are each provided with equal numbers of teeth (13, 14), which are spaced from each other by tooth gaps and which are uniformly distributed around the circumference, the ratio of the effective capacitive width of a tooth at its free end to the effective capacitive width of an adjacent tooth gap at the same circumferential level having a predetermined value, characterized in that the respective effective capacitive width ($Q_1$, $Q_2$) of the teeth of one cylinder surface is smaller than the respective effective capacitive width ($b_2$, $b_1$) of the tooth gaps on the other cylinder surface.

2. A tachogenerator as claimed in Claim 1, characterized in that the ratio of the effective capacitive width of a tooth to the effective capacitive width of an adjacent tooth gap is selected to be of the order of magnitude of 1 : 1 on one cylinder surface and between 1 : 2 and 1 : 4 on the other cylinder surface.

3. A tachogenerator as claimed in Claim 1, characterized in that the ratio is selected to be 1 : 1 ±10% on the one cylinder surface and 1 : 3 ±10% on the other cylinder surface.

4. A tachogenerator as claimed in any of the preceding Claims, characterized in that the two cylinders with the teeth provided on them take the form of plastics parts, whose surfaces are at least partly provided with an electrically conductive layer.

## Revendications

1. Générateur tachymétrique cylindrique de type capacitif, muni d'un rotor (9) et d'un stator (10) qui sont réalisés l'un sous forme d'un cylindre intérieur et l'autre sous forme d'un cylindre creux extérieur coaxial, alors que sur leurs surfaces cylindriques opposées (11, 12), qui forment ensemble un entrefer, les deux cylindres sont munis chacun d'un même nombre de dents (13, 14) réparties uniformément sur le pourtour et séparées par des creux et que le rapport entre la largeur capacitive effective d'une dent à son extrémité libre et la largeur capacitive effective d'un creux voisin de trouvant au même niveau de pourtour présente une valeur prédéterminée, caractérisé en ce que la largeur capacitive effective ($a_1$, $a_2$) des dents sur l'une des surfaces cylindriques est inférieure à la largeur capacitive effective ($b_1$, $b_2$) des creux entre les dents sur l'autre surface cylindrique.

2. Générateur tachymétrique selon la revendication 1, caractérisé en ce que le rapport entre la largeur capacitive effective d'une dent et la largeur capacitive effective d'un creux voisin entre les dents est de l'ordre de 1 : 1 sur l'une des surfaces cylindriques et est compris entre 1 : 2 et 1 : 4 sur l'autre surface cylindrique.

3. Générateur tachymétrique selon la revendication 1, caractérisé en ce que le rapport est choisi égal à 1 : 1 ±10% sur l'une des surfaces cylindriques et à 1 : 3 ±10% sur l'autre surface cylindrique.

4. Générateur tachymétrique selon l'une quelconque des revendications précédentes, caractérisé en ce que les deux cylindres, y compris leurs dents, sont réalisés sous forme de parties plastiques dont les surfaces sont au moins partiellement recouvertes d'une couche conductrice de l'électricité.

FIG.1

FIG.2

FIG.3